# EUROPEAN PATENT APPLICATION

(11) **EP 1 072 981 A2**
(43) Date of publication of application: **31.01.2001**
(21) Application number: 00114850.1
(22) Date of filing: 11.07.2000
(51) Int. Cl.: G06F 17/21

(54) **Document processing device**

(30) Priority: 30.07.1999 JP 21610399
(71) Applicant: Sharp Kabushiki Kaisha, Osaka-shi, Osaka 545-8522 (JP)
(72) Inventor: Nii, Yukakao, Nara-shi, Nara 630-8003 (JP)
(74) Representative: MÜLLER & HOFFMANN Patentanwälte

(57) **Abstract**

A document processing device includes a device information memory section for storing device information including at least either one of a type of a document processing device and surrounding environment of the document processing device, a concealed processing section for performing concealment processing concealing a specific part of inputted document information, and a control section for controlling operation of the concealed processing section based on the device information stored in the device information memory section to cause the concealed processing section to output the inputted document information. The device information memory section stores categorized device information. The concealed processing section provides a specific part of document information with a category according to its contents, compares categories of the device information and the specific part, and judges whether to perform the concealment processing based on results of comparison. The foregoing structure can solve a conventional problem of running a risk of exposing document information outputted by its creator/reader to public eyes around when exchanging information since a concealed part could only be set by a sender.

## Description

### FIELD OF THE INVENTION

The present invention relates to a document processing device capable of concealing items in an outputted document, which should be kept secret or is related to privacy, in accordance with surrounding environment of the device.

### BACKGROUND OF THE INVENTION

In recent years, a number of document processing devices, in particular mobile devices such as laptops and portable machines, which display and transmit personal information in public environment where unspecified persons are around have been marketed. However, when such a document processing device is used, for example, in the train, a document displayed in a display section of the device is exposed to public eyes around, breaking secrecy of the document.

Accordingly, as a technique of concealing outputted contents in the document processing device as above, Japanese Unexamined Patent Publication No. 128116/1993 (Tokukaihei 5-128116 published on May 25, 1993) disclosed a method of editing documents.

This technique can create a single document having the following coexisting parts: a public part of document which can be viewed by unspecified persons, and a confidential part of document, access to which is given only to a specified person. Also, this technique is to prevent readers including the unspecified persons from reading the confidential part of document. In addition, an invisible attribute is set in the technique, which can be cancelled by input of a password with respect to an arbitrary part of an inputted document. This enables only a specified person to read the confidential part of document.

On the other hand, though not a technique of concealing outputted contents, another technique has been developed, which is capable of displaying simplification of an original document when an output capacity of output means is limited, for example, as in a portable machine where an amount of information which can be displayed at a time is limited due to its limited display screen size. A document information transfer device, a document information receiving device and a document information processing device disclosed in Japanese Unexamined Patent Publication No. 134038/1998 (Tokukaihei 10-134038 published on May 22, 1998) are examples of such a technique.

In the foregoing technique, a part of document which can be simplified is detected from document information, and the document information is transferred by inserting a control statement for the detected part, indicating that the detected part can be simplified. Therefore, the simplification of the document information is displayed and, moreover, the level of simplification can be selected in accordance with the number of characters which can be displayed, when displaying the document information at an receiving end.

However, the technique of concealing the outputted contents is not a technique for preventing the document information from becoming visible to unspecified persons. Since a majority of surrounding environments in which the mobile devices, etc. are used are places where the document information can be viewed by unspecified persons, the necessity of concealing (private) parts of a document emerges even with a document created by a user him-/herself or by a person to whom the user is intimate with.

The Japanese Unexamined Patent Publication No. 128116/1993 discloses, however, a technique for enabling a sender of the document information to specify the parts to be concealed, but not a technique for preventing the document information from becoming visible to the unspecified persons when the document information is outputted by a person who has created or who reads the document information.

Likewise, though not a technique of concealing outputted contents, a simplification technique disclosed in the Japanese Unexamined Patent Publication No. 134038/1998 is the one in which a part to be simplified is specified by the sender of the document information, and it is not for enabling the creator or the reader of the document information to prevent the document information from becoming visible to a third person (anyone except the creator or the reader).

### SUMMARY OF THE INVENTION

It is an object of the present invention to provide a document processing device capable of changing a display in accordance with surrounding environment (machine environment), in which, not only a particular part to be concealed can be specified by a creator or a reader of outputted information, but also a part which should be concealed can be extracted when the document information is displayed, even when the part was not specified when creating the document.

In order to attain the foregoing object, a document processing device according to the present invention is made up of:
(a) a device information memory section for storing device information indicative of the surrounding environment of the device;
(b) a concealed processing section for performing concealment processing (concealed processing) to conceal a specific part of inputted information based on the device information; and
(c) an output section for outputting information subjected to the concealment processing.

In the foregoing structure, the device information memory section stores the device information indicative of the surrounding environment of the device. The specific part of the inputted information is concealed by the concealed processing section based on the device information. The information subjected to the concealment processing is outputted from the output section.

Conventionally, when the number of characters which can be displayed is limited in a device at a receiving end, a device at a sending end transferred an original document to the device at the receiving end by inserting a simplification control statement therein. The device at the receiving end realized display of necessary contents within the number of characters which can be displayed by generating a simplified statement according to the simplification control statement.

However, the following problem has been found in the foregoing conventional structure:
since simplification of the document information was subject to the simplification control statement inserted at the sending end, it was impossible at the receiving end to specify as to which part should be simplified. Therefore, desired concealment processing could not be performed at the receiving end in case where the necessity of concealing a part of the document information emerged depending on the surrounding environment of the device at the receiving end.

In the light of the foregoing problem, the structure of the present invention enables concealment processing to be performed based on the device information indicative of the surrounding environment of the device. Hence, for example, even when the surrounding environment changes after input of the document information, the specific part can still be concealed based on the new surrounding environment, thereby outputting necessary document information while ensuring preservation of confidentiality.

Additional objects, features, and strengths of the present invention will be made clear by the description below. Further, the advantages of the present invention will be evident from the following explanation in reference to the drawings.

### BRIEF DESCRIPTION OF THE DRAWINGS

Fig. 1 is a block diagram showing an embodiment of a document processing device of the present invention.
Fig. 2 is an explanatory drawing of a document 1 showing personal information.
Fig. 3(a) is an explanatory drawing showing a display of the document 1 by a mobile device; and Fig. 3(b) is an explanatory drawing showing a display of the document 1 by a personal computer used in an office, etc.
Fig. 4(a) is an explanatory drawing showing a state of concealment of a document 2; and Fig. 4(b) is an explanatory drawing showing the document 2.
Fig. 5 is an explanatory drawing explaining as to which parts of the document 1 can be concealed in the mobile device.
Fig. 6 is an explanatory drawing explaining as to which of the concealable parts of the document 1 will be replaced with icons.
Fig. 7 is an explanatory drawing explaining a state in which level is given to secrecy in the concealable parts of the document 1.
Fig. 8 is an explanatory drawing showing a state in which the concealable parts of the document 1 are replaced with their corresponding icons, and a state in which concealment is cancelled.
Fig. 9 is an explanatory drawing explaining functions of a concealed processing section, a data memory section and a concealed information section shown in Fig. 1.
Fig. 10 is an explanatory drawing for explaining contents of a setting information file of the data memory section shown in Fig. 9.
Fig. 11 is an explanatory drawing showing icon information which is stored in a search database shown in Fig. 9.
Fig. 12 is an explanatory drawing explaining a state in which a user is enabled to specify a concealed part.
Fig. 13 is an explanatory drawing explaining a state in which information which should be concealed is made selectable.
Fig. 14(a) is an explanatory drawing showing the document 1 when it is outputted to an individual output tray (secret tray); and Fig. 14(b) is an explanatory drawing showing the document 1 when it is outputted to a common tray.
Fig. 15 is an explanatory drawing showing a state of a network connection between a portable machine and an output device with a simple tray.
Fig. 16 is a flowchart showing a control operation in the document processing device according to the present embodiment.
Fig. 17 is a flowchart showing details of an operation in a step (S5) for generating a concealed information list shown in Fig. 16.

### DESCRIPTION OF THE EMBODIMENTS

### [FIRST EMBODIMENT]

The following will explain one embodiment of the present invention with reference to Figures.

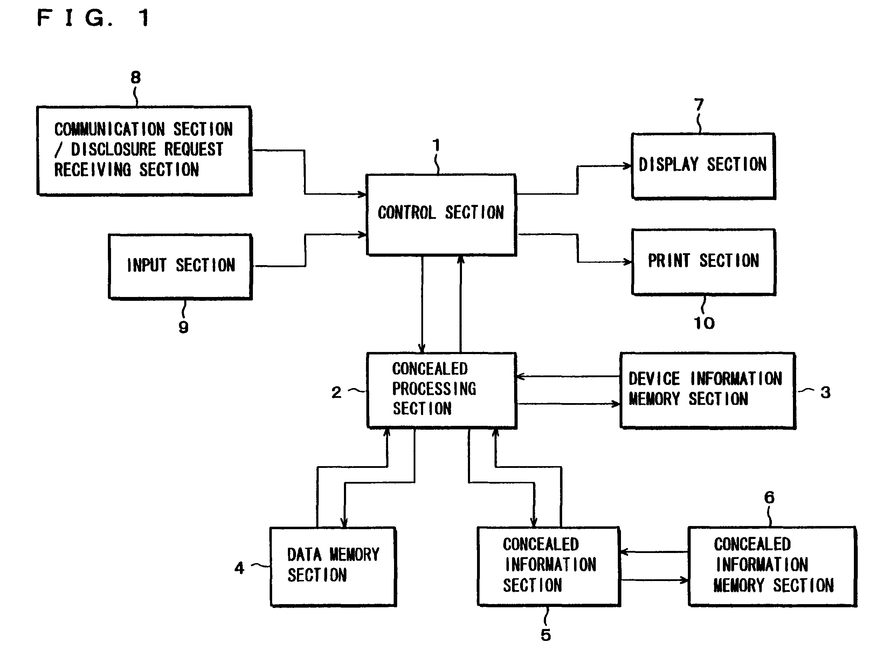

The document processing device according to the present embodiment is, as shown in Fig. 1, made up of: a control section 1; a concealed processing section 2; a device information memory section 3; a data memory section 4; a concealed information section 5; a concealed information memory section 6; a display section 7; a communication section / disclosure request receiving section 8; an input section 9; and a print section 10.

The control section 1 is bidirectionally connected to the concealed processing section 2. In addition, the concealment section 2 is bidirectionally connected to each of the device information memory section 3, the data memory section 4 and the concealed information section 5. In addition, the concealed information section 5 is bidirectionally connected to the concealed information memory section 6.

The input section 9 and the communication section / disclosure request receiving section 8 are connected to the control section 1, and document information is outputted in a single direction from the input section 9 and the communication section / disclosure request receiving section 8 to the control section 1. The display section 7 and the print section 10 are also connected to the control section 1, and they receive the document information outputted in a single direction from the control section 1. In other words, the document information processing device of the present embodiment possesses the input section 9 and the communication section / disclosure request receiving section 8 as input means, and the display section 7 and the print section 10 as output means (output sections).

The following will explain a concealment operation of the document processing device of the present embodiment with respect to a specific part of a document.

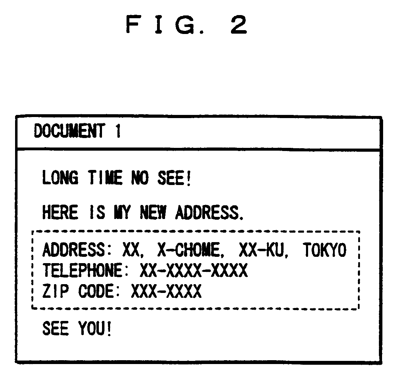

First, Fig. 2 shows the following sample text containing personal information displayed in the display section 7:

Long time no see! Here is my new address.
Address: XX, X-chome, XX-ku, Tokyo
Telephone: XX-XXXX-XXXX
Zip Code: XXX-XXXX
See you!

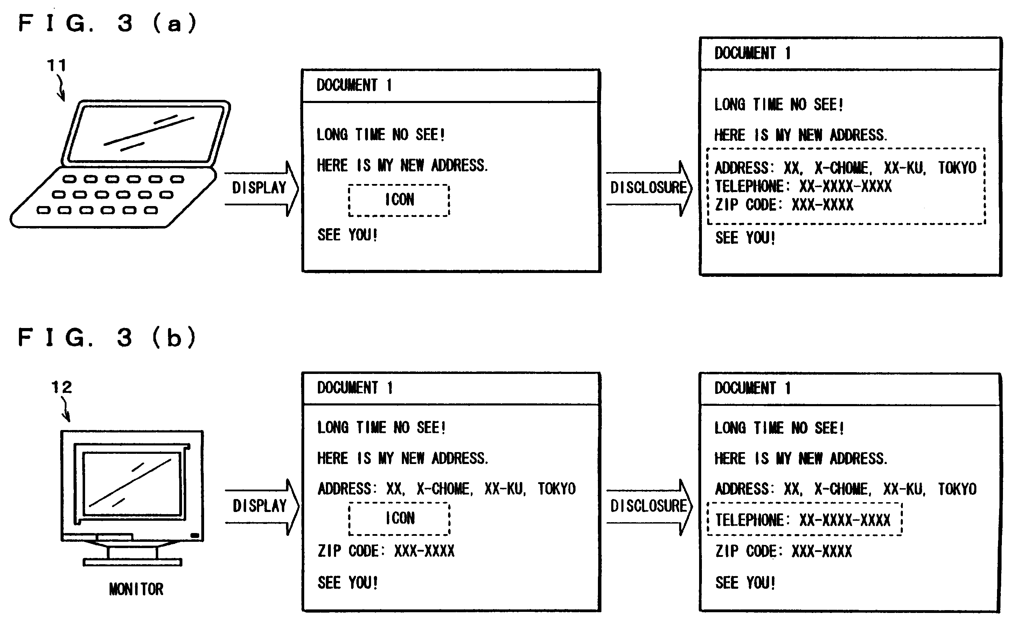

In this sample, since the address, the telephone number and the zip code are private information, they require to be concealed. Additionally, in this sample, it is assumed that all of the address, the telephone number and the zip code are to be concealed when using a device in an environment where numbers of unspecified third persons are around as in the case of a mobile device 11 shown in Fig. 3 (a).

On the other hand, when, for example, a desktop personal computer (PC) 12 (*see* Fig. 3(b)) is used in an office, etc., whose environment is unlike that of the mobile device 11 where numbers of the unspecified third persons are around, it is assumed that only the telephone number but not the address and the zip code is to be concealed.

To this end, in the former case of display by the mobile device 11, as shown in Fig. 3(a), the document processing device of the present embodiment first conceals all of the address, the telephone number and the zip code, then, displays icons in place of the concealed parts, which preferably indicate that they conceal information of the address, etc.

In the latter case of display by the desktop PC 12, as shown in Fig. 3(b), the telephone number is replaced with an icon which preferably indicates that it conceals the telephone number in the display.

As explained, in order to conceal specific parts of the inputted document information in accordance with a type of a machine, or surrounding environment of the machine, the device information memory section (device information memory means) 3 stores device information including at least either one of the type of the machine and the surrounding environment of the machine. In addition, the control section (control means) 1 operates the concealed processing section (concealed processing means) 2 based on the device information stored in the device information memory section 3 so as to control the concealed processing section 2 to output document information subjected to concealment processing (concealed processing).

In other words, the device information memory section (device information memory means) 3 stores, as previously set device conditions, conditions of each type of a machine to be used. In their respective states (conditions) as shown in Figs. 3 (a) and 3 (b), a device condition is searched by the concealed processing section 2, and the concealment processing is performed based on the searched device condition.

More specifically, the device information memory section 3 stores categorized device information which has been classified depending on which document information category is to be concealed. The concealed processing section 2 sets a category of a specific part of the document information in accordance with contents of the specific part, and compares the category of the specific part with the category of the device information. Then, the concealed processing section 2 judges as to whether the concealment processing should be performed based on the results of comparison. For example, when the specific part of the document information is categorized as ^{"}personal information" while the device information is "in the train", the document information is displayed in a state in which the concealment processing is performed on the specific part as shown in Fig. 3 (a).

In this way, parts to be concealed are adjusted in accordance with the surroundings of the device being used or whether a third person can view the document information. Further, the concealment of confidential information becomes discernible by displaying an icon in replacement of the concealed part, thereby enabling a user to notice the concealment of information with ease.

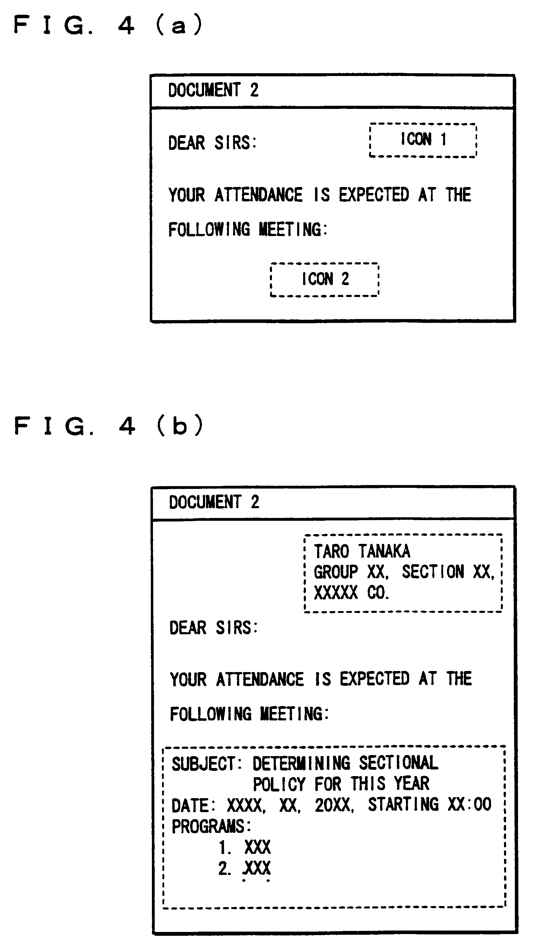

A business document as shown in Fig. 4(a) and 4(b) is another example of the replacement of the parts to be concealed with the icons. The business document in Fig. 4(a) shows a text as follows: "Dear Sirs: [Icon 1] Your attendance is expected at the following meeting: [Icon 2]".

On the other hand, in Fig. 4(b), Icon 1 relates to information of a creator or a sender of this document, which reads "Taro TANAKA, Group XX, Section XX, XX Co.^{"} while Icon 2 contains concrete details of the meeting, which reads:
Subject: Determining Sectional Policy for This Year
Date: XXXX, XX, 20XX, Starting XX:00
Programs: 1. XXX, 2. XXX, ...
The present embodiment can thus be applied to confidential documents for business purposes as well.

Additionally, it is preferable that concealment can be cancelled by an input section 9, etc. as shown in Figs. 3(a), 3(b) and 4(b). More specifically, concealment is not required if it is confirmed that there will be no third persons around to view document information due to the surrounding environment of a machine. In this case, concealment is cancelled by a predetermined operation of the input section 9, which results in output of a document information without concealing a part which would otherwise have been concealed. Consequently, the document information can be created or read under normal conditions. Note that, concealment ineffective (cancelling) means (a concealment cancellation section) may be provided, separately from the input section 9.

Meanwhile, it is preferable in the document processing device of the present embodiment that the document information be displayed in the display 7 so that the user can understand as to which part of the document is concealable.

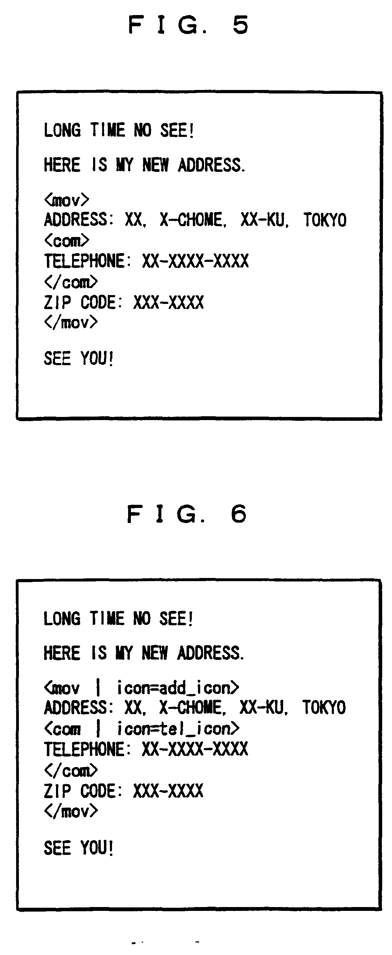

In this case, as shown in Fig. 5, it is preferable in the case of Fig. 3(a) that a control character string such as 〈mov〉 is inserted in front of the address, and 〈/mov〉 after the zip code, respectively, in order to indicate that the address, the telephone number and the zip code displayed between these control character strings can be concealed in the mobile device. On the other hand, since the telephone number alone should be concealed in the case of Fig. 3 (b), the control character strings 〈com〉 and 〈/com〉 are inserted in front of and after the telephone number, respectively.

Furthermore, when not simply concealing but replacing the specific part with the icon which indicates what information is concealed after concealment, as shown in Fig. 6, a control character string of 〈mov|icon=add_icon〉 is inserted in front of the address, and another control character string of 〈com|icon=tel_icon〉 is inserted in front of the telephone number, thereby clearly indicating that the concealed information is to be replaced with the icon.

Incidentally, it is noted from the above that among all the information of address, telephone number and zip code which are of greater confidentiality than the other displayed information, the information of telephone number in particular is the most confidential of all.

Accordingly, the concealment of the specific part may be controlled based on a level given as a numerical value of confidentiality (the necessity of concealment). For example, level 1 is given to the confidentiality of information with respect to the address, the telephone number and the zip code, and level 2 is given to the confidentiality of the telephone number in particular.

In order to realize this control, the device information memory section 3 stores a numerical value of the device information. The concealed processing section 2 sets the level of the necessity of concealment with respect to the specific part of the document information, compares the level thus set to the numerical value of the device information, then judges based on the results of the comparison as to whether to perform the concealment processing.

For example, when device information of "in the train" is stored with a numerical value of 1, the "address", the "zip code" and the "telephone number", whose levels are higher than the numerical value of 1, are concealed (*see* Fig. 3 (a)). However, when the device information is "in the office" which is stored with a numerical value of 2, only the "telephone number", whose level is higher than the numerical value of 2, is concealed (*see* Fig. 3 (b)).

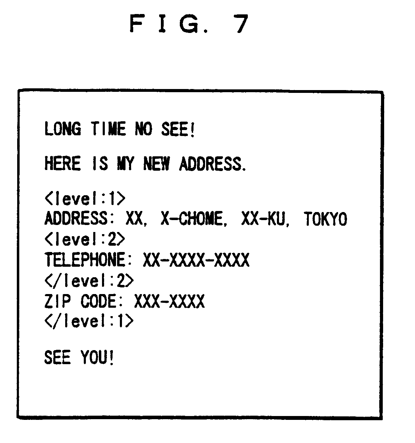

Here, with respect to the control character strings indicated in the display 7, as shown in Fig. 7, 〈level:1〉 is inserted in front of the address, and 〈/level:1〉 after the zip code. In addition, 〈level:2〉 and 〈/level:2〉 are inserted in front of and after the telephone number, respectively. By thus giving the necessity of concealment in levels, the part to be concealed can be adjusted in accordance with the degree of a potential risk of the confidential document information being viewed by the third persons.

Note that, since a procedure of concealment in the above is completely the same as in the cases shown in Figs. 3(a) and 3(b), explanation thereof will be omitted. It should be noted, however, that it is also preferable here to replace the concealed part with the icon as shown in Figs. 3(a) and 3(b).

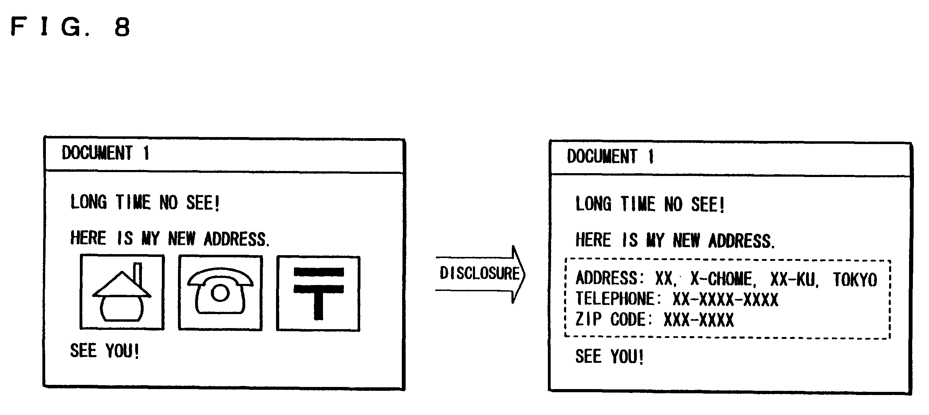

Further, with respect to the replacement of the concealed information with the icon, means for replacing all of the address, the telephone number and the zip code by a single icon is introduced in Fig. 3(a). However, as shown in Fig. 8, other means for replacing each item with a corresponding icon may also be used, such as an address icon for the address, a telephone number icon for the telephone number and a zip code icon for the zip code. By thus replacing the concealed information with an individual icon, a user can easily grasp the overview of the document, even though the confidential information remains concealed.

In addition, the document processing device of the present embodiment may also have an arrangement in which the sender can specify an icon for concealing information which he/she has created, when transferring the document information. That is, not only the document information but also the icons which have been associated with the parts to be concealed can be transferred altogether as the document information, when transferring the document information, thereby enabling a user at the sending end (the sender) to specify, or providing a user at the receiving end (the reader) with, icons for concealing information created by the sender. Further, such a bidirectional transfer of the document information enables the sender and the reader to exchange icons between them.

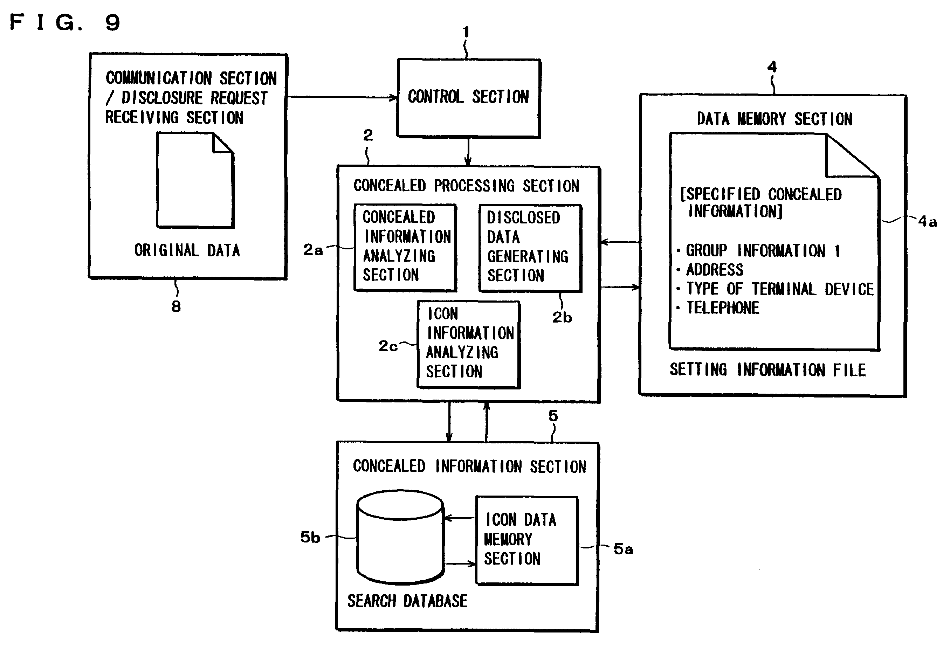

The following will explain in more detail the functions of the concealed processing section 2, the data memory section 4 and the concealed information section 5, illustrated in Fig. 1. As shown in Fig. 9, the concealed processing section 2 is made up of a concealed information analyzing section 2a, a disclosed data generating section 2b and an icon information analyzing section 2c. In addition, the data memory section 4 includes a setting information file 4a which specifies information to be concealed. Moreover, the concealed information section 5 is made up of an icon data memory section 5a and a search database 5b.

Receiving original data from the communication section / disclosure request receiving section 8, the control section 1 outputs the original data to the concealed processing section 2. In the concealed processing section 2, the concealed information analyzing section (extracting means) 2a first extracts a part to be concealed from the original data based on a condition searched out of the setting information file 4a (will be discussed below), then, the disclosed data generating section (judging means) 2b compares the part to be concealed to contents of the original data on the basis of the condition above so as to generate data to be finally disclosed. Here, since it is preferable that the part to be concealed is replaced with an icon, the part to be concealed is replaced with the icon by the icon information analyzing section 2c and inserted to the data to be disclosed.

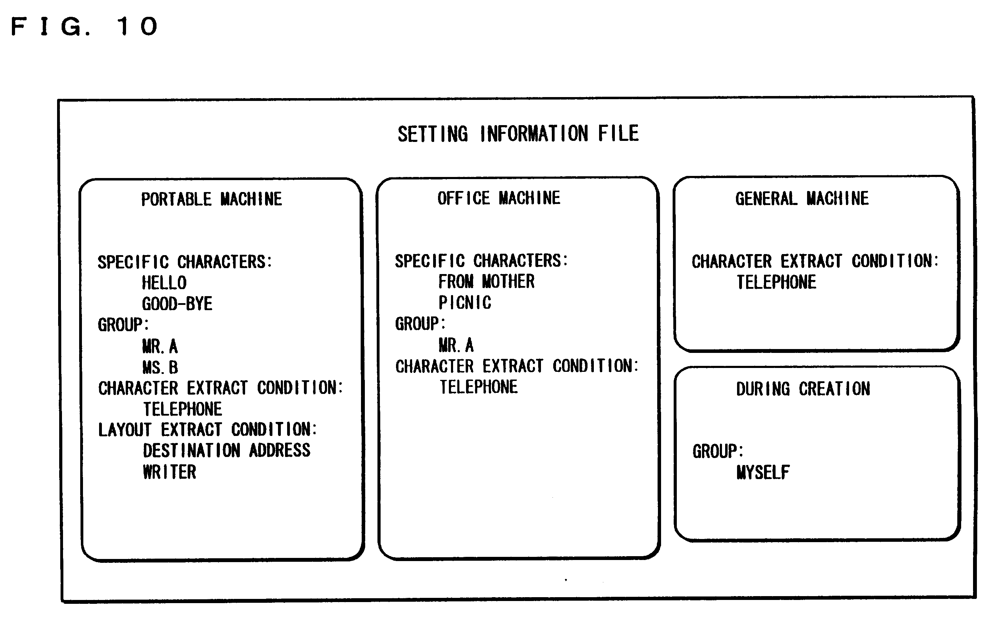

The condition for setting the part to be concealed is registered in the setting information file 4a of the data memory section 4. In the setting information file 4a, as shown in Fig. 10, different concealed information is specified depending on a type of the machine. For example, when a portable machine (mobile device) is used as a machine, a condition for judging the part to be concealed is set so that all the information related to the personal information are concealed in consideration of the environment where the unspecified third persons are around. The condition here includes, for example, particular character strings such as "Hello" and "Good-bye", a particular group information such as personal information with regard to Mr. A or Ms. B, a character extract condition in the outputted document information such as the telephone number and the address, and a layout extract condition such as a destination address and a writer. An example of the character extract condition in case of the telephone number is "telephone: 〈number〉 * 10 pieces".

On the other hand, when an end device for business purposes in an office is used as the machine and when the unspecified persons are hardly around yet the document information is nonetheless the personal one, while concealment is not particularly required for the layout extract condition such as the destination address and the writer in the personal information, the personal information that appears to be irrelevant to business is concealed. For example, such personal information includes particular character strings such as "from Mother" and "picnic", group information such as personal information with regard to Mr. A and character extract condition such as telephone number.

Further, when a general end device is used as the machine, there is little possibility of allowing the unspecified persons to view the document information, compared to the portable machine and the end device in the office. Therefore, it is sufficient to conceal, for example, only the character extract condition such as telephone number. In addition, when creating the document, "myself" is set as the group information so as to conceal information on the creator of the document.

As described, the condition for judging the parts to be concealed is registered beforehand in the setting information file 4a, then, the parts to be concealed are extracted based on such registered condition, which are compared to judge as to whether they are concealable. Consequently, desired data can be concealed at the reading end of the document information without setting by the creator of the document information.

Note that, with regard to the group information, it is preferable that only information on a particular person can be concealed by using a list of addresses (e.g. an address book, a telephone book, etc.) in the setting information file 4a, thereby collectively concealing information with respect to particular persons and groups by utilizing information such as the list of addresses created by the user, without separately specifying items such as name, address and telephone number in each database.

Icon information which is added by the icon information analyzing section 2c in place of the part to be concealed is stored in the search database 5b of the concealed information section 5. A request for an icon corresponding to the part to be concealed is outputted to the concealed information section 5 at a stage when the disclosed data generating section 2b has generated disclosed data. In the concealed information section 5, the icon information is searched out of the search database 5b by the icon data memory section 5a, and the searched icon information is outputted to the icon information analyzing section 2c. The icon information analyzing section 2c, then, analyzes the searched icon information so as to insert an icon corresponding to the disclosed data.

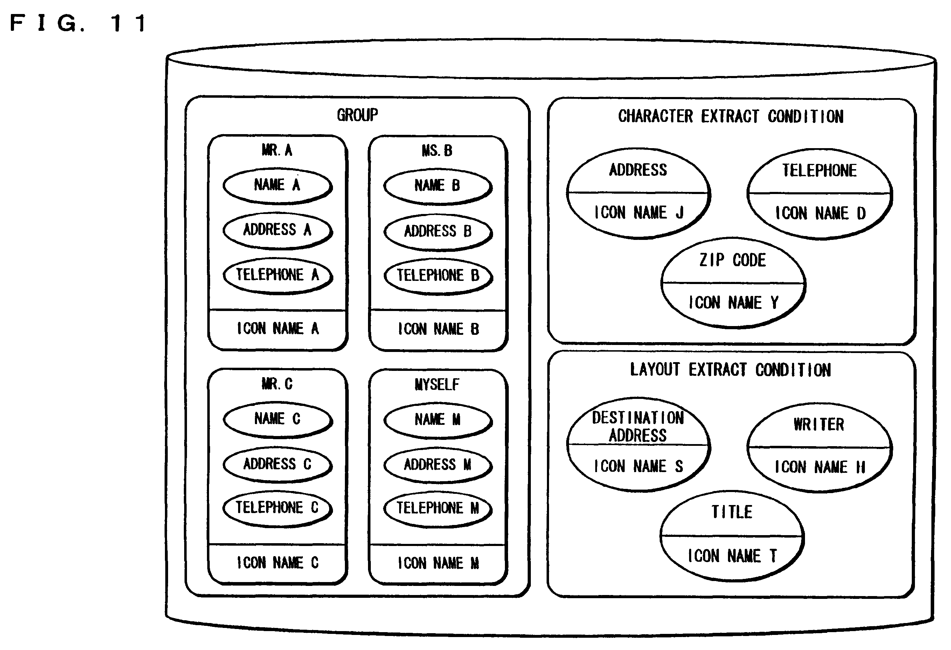

The icon information stored in the search database 5b includes, as shown in Fig. 11, icons corresponding to the group information, icons corresponding to the character extract condition and icons corresponding to the layout extract condition. The icons corresponding to the group information include, for example, an icon indicating Mr. A (icon name A) such as name A, address A, and telephone number A of Mr. A, which are used when concealing the personal information of Mr. A. Likewise, icon name B for Ms. B, icon name C for Mr. C, and an icon for a user him-/herself are stored.

As the icons corresponding to the character extract condition, for example, when a character string corresponding to "address" is extracted, an icon for the address (icon name J) is stored as an icon which replaces the character string, regardless of a type of information. Likewise, icon name Y for "zip code" and icon name D for "telephone number" are stored, respectively.

Likewise, in respect of the layout extract condition, an icon for the destination address corresponding to a layout of "destination address" (icon name S), an icon for a title corresponding to a layout of "title" (icon name T) and an icon for the writer corresponding to a layout of "writer" (icon name H) are stored.

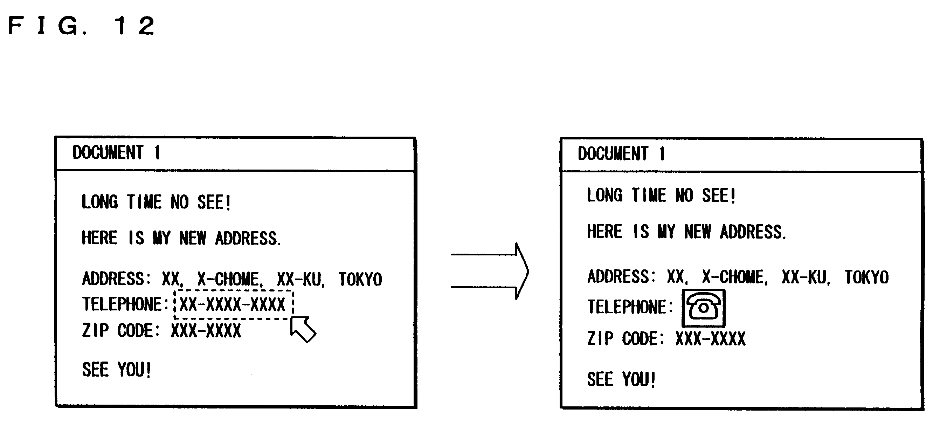

Although the part to be concealed was registered beforehand in the foregoing example, it may also be arranged so that a user can appropriately specify parts to be concealed as shown in Fig. 12, in which a "telephone number" part is specified to be concealed so that it is replaced with the icon for the "telephone number" after concealment, thereby specifying parts to be concealed depending on a state when creating and editing the document information. Note that, in this case, with regard to the specifying means (specifying section) for specifying parts to be concealed, the input section 9 may be used directly or other specifying means may be separately provided.

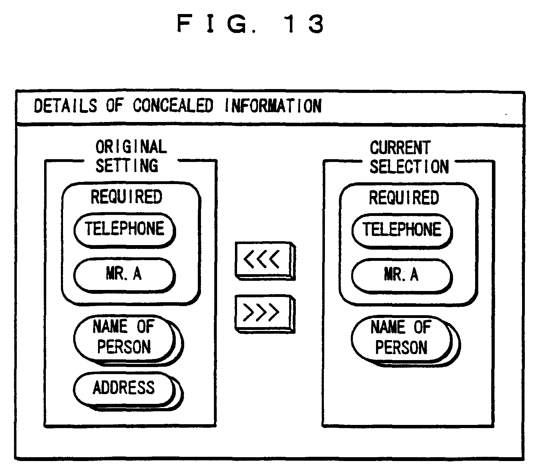

Further, as shown in Fig. 13, a desired condition among the registered conditions for judging the parts to be concealed can be made ineffective. In Fig. 13, it is assumed as details of the concealed information that an original setting includes necessary conditions of "telephone number" and "Mr. A", and, in addition, "name of person" and "address" as conditions for the concealed information. Here, if the user decides that the "address" does not require to be concealed, he/she can select a current selection in which a condition for concealing the "address" is cancelled, thus enabling the user to select a predetermined condition. In this way, the user can select a condition for cancelling concealment in accordance with the contents of the document. Note that, the user can cancel a desired condition by using the input section 9. In addition, condition cancelling means (selection section) may be provided separately from the input section 9.

Accordingly, the concealed processing section 2 performs concealment processing with respect to a part which complies with at least either one of the following two conditions: that the part satisfies a condition selected by the user; and that the part is specified by the user via a specifying section.

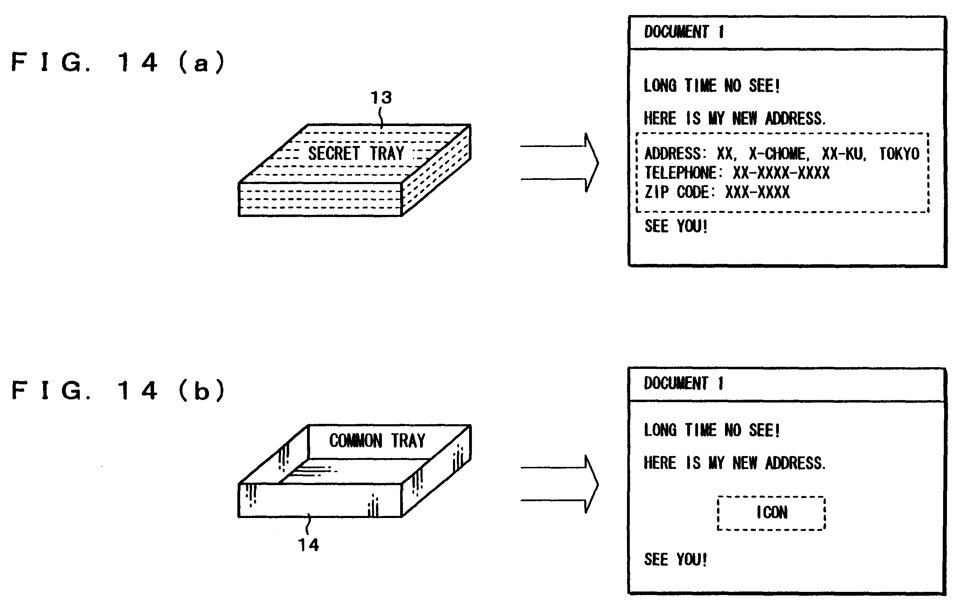

Cancellation of concealment was explained based on Figs. 3(a), 3(b), 4(a) and 4(b) above, yet, alternatively, when printing information, in which printing may be made while a concealed part is automatically cancelled when it is possible, as shown in Fig. 14(a), to store a print document of document information in a secret tray (output information secrecy preserving means) 13 such as an individual output tray or a private tray, which can be hidden from the third persons. It is evident that only the person who has specified a print can view the printed document when the secret tray 13 is utilized. Thus, as shown in Fig. 14(a), cancellation of concealment can be omitted by automatically cancelling the concealment and thus printing a document in which concealment is cancelled.

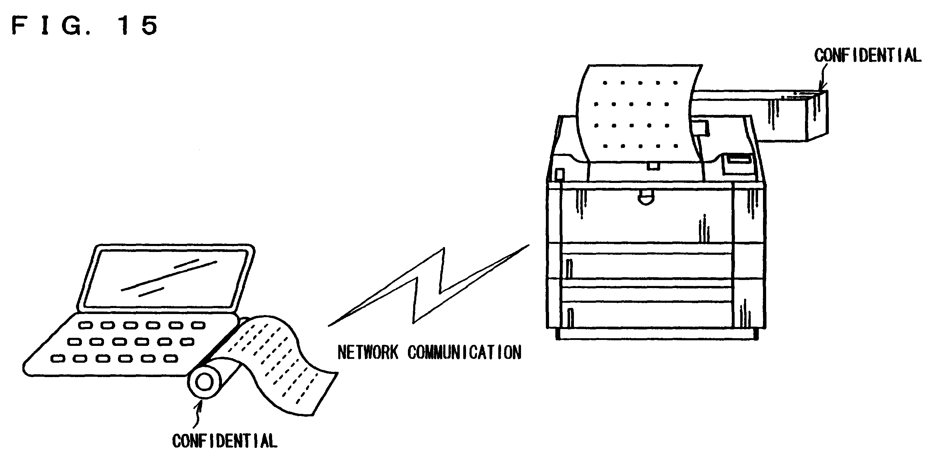

In the case of utilizing the secret tray 13, for example, when the portable machine is provided with an output device with the simple tray as shown in Fig. 15, concealed information displayed in the display section is outputted to a simple tray after looking it over, thereby enabling a user to look over document information in which concealment is cancelled at any time without activating the portable machine.

Note that, as shown in Fig. 14(b), in the case of storing a print in a common tray 14, concealed document information is outputted.

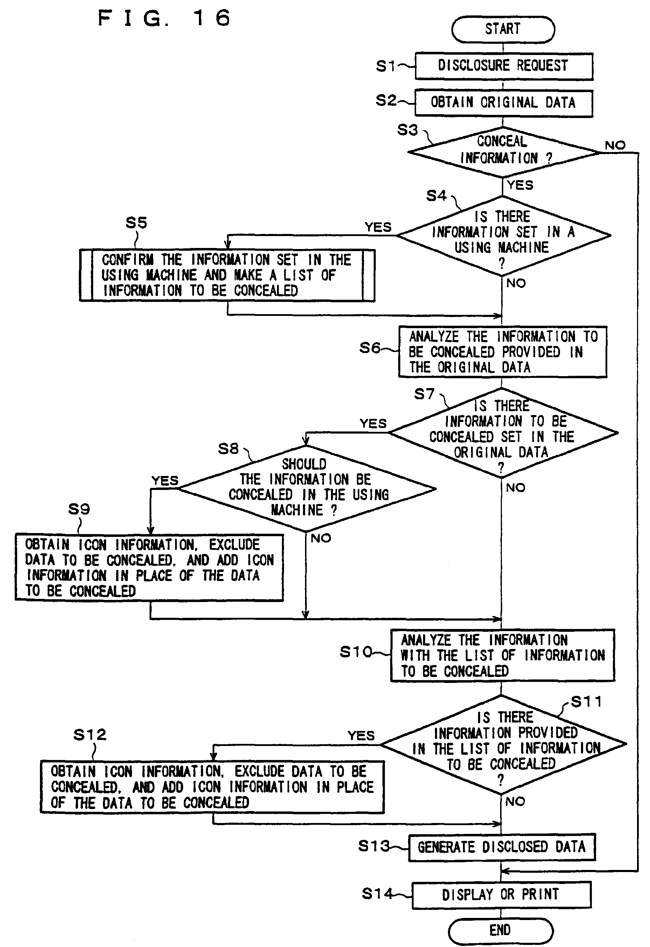

Control operation of the document processing device according to the present embodiment is as shown in Fig. 16.

First, when a disclosure request for document information is made (S1), original data is obtained (S2). Second, it is judged whether to conceal document information (S3). When judged to conceal document information, it is judged whether there exist conditions for information to be concealed which have been set in a using machine (S4). If such conditions exist, the conditions set in the using machine is confirmed, and a list of information to be concealed is created (S5). Then, the information to be concealed is analyzed based on the conditions for the document information to be concealed provided in the obtained original data (S6). If the conditions do not exist, the sequence goes to S6, skipping S5.

Next, it is judged whether there exists information which coincides with the conditions for the document information to be concealed provided in the original data (S7). If such information is found, it is judged whether the information to be concealed should be concealed in view of the surrounding environment of the machine currently in use (S8). If the information is judged to be concealed, icon information is obtained from the concealed information section 5, and the information to be concealed is excluded from the original data, and the icon information obtained is added in place of predetermined icon information (S9), and the information to be concealed provided in the list of the information to be concealed created in S5 is analyzed (S10).

If information which coincides with the conditions is not found in the original data in S7, the sequence goes to S10. In addition, when it is judged not to conceal the information in S8, the sequence goes to S10, skipping the process of S9.

Then, after analyzing the information to be concealed in S10, it is judged whether there exists information to be concealed in the original data, which coincides with the list of the information to be concealed (S11). If the information to be concealed exists, icon information is obtained, and the information to be concealed is excluded from the original data, and the icon information obtained is added in place of predetermined icon information (S12), and final disclosed data to be outputted from the output means such as the display section 7 and the print section 10 are generated (S13).

When the information to be concealed is found in S11, the sequence goes to S12. Then, an output operation of display or print is performed, finishing a series of control. Note that, if it is judged not to conceal the information in S3, the sequence goes to S14 from S3 to directly carry out the output operation.

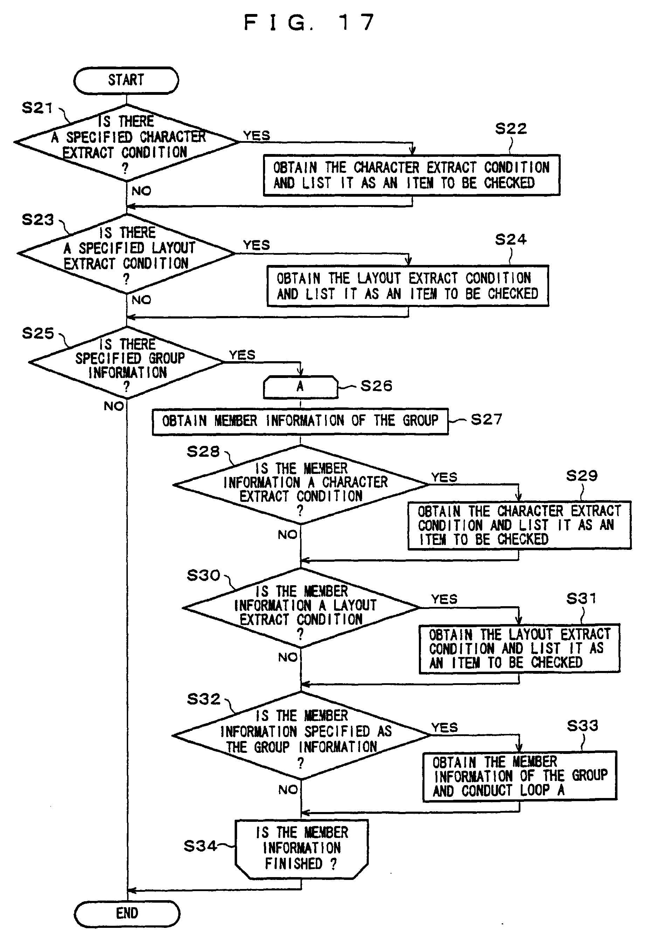

Fig. 17 describes operations of creating the list of the information to be concealed (S5).

First, in outputting the document information, it is judged whether a character extract condition has been specified (S21). If the character extract condition has been specified, it is obtained and listed up as an item to be checked (S22), and it is judged whether a layout extract condition has been specified (S23). If it is judged that the character extract condition has not been specified in S21, the sequence goes to S23.

If it is judged that the layout extract condition has been specified in S23, the layout extract condition is obtained and listed up as an item to be checked (S24), and it is judged whether group information has been specified (S25). If it is judged that the layout extract condition has not been specified in S23, the sequence goes to S25.

If it is judged that the group information has been specified in S25, the sequence goes to loop A (S26), and member information of the group is obtained (S27).

Next, it is judged whether the obtained member information is a character extract condition (S28). If so, the character extract condition is obtained and listed up as an item to be checked (S29), and it is judged whether the obtained member information is a layout extract condition (S30). If the member information is not the character extract condition, the sequence goes to S30.

If it is judged that the obtained member information is the layout extract condition, the layout extract condition is obtained and listed up as an item to be checked (S31), and it is judged whether the member information has been specified as group information (S32). If the obtained member information is not the layout extract condition, the sequence goes to S32.

If it is judged that the member information has been specified as the group information, the member information of the group is obtained, and the loop A following S26 is repeated again (S33). However, if the member information has not been specified as the group information, it is judged whether the member information is finished. (S34). If the member information is not finished, the loop A following S26 is repeated.

If it is judged in S25 that the group information has not been specified, creation of the list of the information to be concealed is finished.

As described, a document processing device for outputting an inputted document information of the present invention may have an arrangement which includes: (a) device information memory means for storing device information which includes at least either one of a type of a document processing device and surrounding environment of the document processing device; (b) concealed processing means for performing concealment processing which conceals a specific part of the inputted document information; and (c) control means for controlling operation of the concealed processing means based on the device information stored in the device information memory means so as to cause the concealed processing means to output the inputted document information.

In the foregoing structure, the document information is outputted after performing control of concealing a part of the document information based on the device information. This enables a user to display or print a document with a confidential or private part being concealed, for example, in devices such as portable machines which are used in an environment where unspecified persons are around, or devices shared with the other users. As a result, even in case where a reader of the outputted document information happens to display the document information inattentively, parts of the document where required are concealed in accordance with device environment, thereby reducing a potential risk of allowing third persons to view confidential information.

The device information memory means of the present invention may have an arrangement in which it stores device information in a categorized form while the concealed processing means sets a category for a specific part of the document information according to contents of the specific part, compares a category of the device information to the category of the specific part, and judges whether to perform the concealment processing based on the results of comparison.

In the foregoing structure, since specific parts of the device information and the document information have been categorized, it is possible to adjust the way a confidential part is concealed in accordance with operating environment and presence or absence of a person who can view the document information.

The device information memory means of the present invention may have an arrangement in which it stores the device information in numerical values while the concealed processing means sets a required level of concealment with respect to the specific part of the document information, compares the level to the numerical value of the device information, and judges whether to perform the concealment processing based on the results of comparison.

In the foregoing structure, since the specific parts of the device information and the document information have been given numerical values (divided into different levels) in accordance with the necessity of concealment, it is possible to adjust a concealed part in consideration of a degree of potential risk of the document information exposed to others.

The present invention may have an arrangement which includes data memory means for registering conditions to judge a part to be concealed in the document information, and the concealed processing means possesses extracting means for extracting a part to be concealed from the document information based on the condition registered in the data memory means.

In the foregoing structure, since the data memory means is a database which stores the conditions for judging which part should be concealed, it is possible easily to extract the part to be concealed from the extracting means of the concealed processing section and conceal it according to a type of the concealed part. Therefore, the creator of the document information is not necessarily required to set a concealed part because the part to be concealed can be concealed at a reading end.

The present invention may have an arrangement in which the condition for judging the part to be concealed registered in the data memory means is a predetermined character string, and the concealed processing means includes judging means for judging whether to perform the concealment processing as a result of comparison between the character string and the contents of the document information.

In the foregoing structure, the judging means of the concealed processing means first judges as to whether the information of the part to be concealed is appropriate from the view of the entire document information, then, concealment processing is performed according to the results of judgment. For this reason, the creator of the document information is not necessarily required to set a concealed part of the document information because information can be concealed individually where required at the reading end.

The present invention may have an arrangement which includes condition cancelling means for cancelling a desired condition among the conditions for judging the part to be concealed registered in the data memory means.

In the foregoing structure, even in cases where pre-registered conditions for concealment are not required depending on the contents of the document information, it is possible to select and cancel a condition for concealment by the condition cancelling means in accordance with the contents.

An address book is registered in the data memory means of the present invention. Accordingly, the concealed processing means may have an arrangement which performs the concealment processing with respect to information on particular persons based on data of the address book.

In the foregoing structure, it is possible to utilize PIM information such as the address book created by a user without separately specifying information such as name, address and telephone number by the data memory means, thereby collectively concealing information on particular persons or groups.

The present invention may have an arrangement which includes specifying means for specifying the part to be concealed in the document information.

In the foregoing structure, it is possible to perform the concealment processing with respect also to information other than the part which has been registered beforehand, which allows the part to be concealed to be specified in accordance with the surroundings when creating or editing the document.

The present invention may have an arrangement which includes concealment cancelling means for setting cancellation of concealment with respect to the document information subjected to concealment processing, and the control means for carrying out control so that document information, in which concealment has been cancelled and which became ineffective, is outputted under normal condition without concealment processing regardless of the device information.

In the foregoing structure, depending on the condition in which the device is used, in case where the document information is not exposed to the eyes of the people around, concealment processing of a document is cancelled by using the concealment cancelling means. In this way, entire contents of a document which are usually concealed can be viewed by the operation in accordance with the surroundings of the device.

The present invention may have an arrangement in which, when output means for outputting the document information includes output information secrecy preserving means which outputs the document information while maintaining secrecy of contents thereof, the concealed processing means outputs the document information by cancelling concealment processing therein.

In the foregoing structure, the output information secrecy preserving means such as a private tray or an individual output tray is provided when it is obvious that a user alone views the document, and concealment is automatically cancelled, thereby omitting a step of cancelling concealment. For example, when a portable machine includes an output device with a simple tray, it is possible, by outputting a concealed document after looking it over, to read through the document information readily at any time, without activating an end device therefor.

The concealed processing means of the present invention may have an arrangement which performs icon processing for replacing information of a part subjected to the concealment processing with an icon.

In the foregoing structure, since the concealed part is replaced with the icon, existence of confidential information in the location of the icon displayed in the outputted information can readily be recognized.

The icon of the present invention may have an appearance related to the information of the part subjected to the concealment processing.

In the foregoing structure, the icon displays a sketch of the information of the concealed part, which makes it easier for the reader to grasp the outline of the document even though the information is concealed.

The control means of the present invention may have an arrangement which collectively transfers as document information the icon related to the information of the part to be concealed, together with original document information.

In the foregoing structure, since the icon is also transferred together with document information to be transferred, a sender can specify an icon used to conceal his/her information. In addition, an exchange of icons between users can be realized by a bidirectional transfer of the document information.

A document processing device for outputting inputted document information according to the present invention may have an arrangement which includes: (a) device information memory means for storing device information which includes at least either one of a type of a document processing device and reading environment of the document processing device in which outputted document is read; (b) concealed processing means for performing concealment processing which conceals a specific part of the inputted document information; and (c) control means for controlling operation of the concealed processing means based on the device information stored in the device information memory means so as to cause the concealed processing means to output the inputted document information.

In the foregoing structure, the document information is outputted after performing control of concealing a part of the document information based on the device information. This enables a user to display or print a document with a confidential or private part being concealed, for example, in devices such as portable machines which are used in an environment where unspecified persons are around, or devices which are shared with the other users. As a result, even in case where a reader of the outputted document information happens to display the document information inattentively, parts of the document are concealed where required in accordance with device environment, thereby reducing a potential risk of allowing third persons to view confidential information.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. A document processing device, comprising:
a device information memory section (3) for storing device information indicative of surrounding environment of the device;
a concealed processing section (2) for performing concealment processing to conceal a specific part of inputted information based on the device information; and
output sections (7, 10) for outputting information subjected to the concealment processing.

2. The document processing device as set forth in claim 1, wherein:
said device information memory section (3) stores the device information which has been classified depending on which information category is to be concealed, and
said concealed processing section (2) sets a category with respect to the specific part of the inputted information, and judges whether to conceal said specific part based on said category and the device information.

3. The document processing device as set forth in claim 1, wherein:
said device information memory section (3) stores the device information in numerical values, and
said concealed processing section (2) sets a confidentiality level of the specific part of the inputted information, and judges whether to conceal said specific part based on said confidentiality level and a numerical value of the device information.

4. The document processing device as set forth in claim 1, further comprising:
a data memory section (4) for storing conditions for specifying a part to be concealed per device information,
wherein said concealed processing section (2) performs the concealment processing with respect to parts which satisfy the conditions stored in said data memory section (4).

5. The document processing device as set forth in claim 4, further comprising:
a selection section which enables a user to select a predetermined condition from the conditions stored in said data memory section (4),
wherein said concealed processing section (2) performs the concealment processing with respect to parts which satisfy a selected condition.

6. The document processing device as set forth in claim 5, further comprising:
a specifying section which enables the user to specify the part to be concealed,
wherein said concealed processing section (2) performs the concealment processing with respect to a part which satisfies a condition selected by the user, and/or a part which is specified by the user via said specifying section.

7. The document processing device as set forth in claim 1, wherein:
said data memory section (4) stores an address book, and
said concealed processing section (2) collectively conceals personal information on particular persons based on said address book.

8. The document processing device as set forth in claim 1, wherein:
said concealed processing section (2) performs icon processing for replacing a part to be concealed with an icon.

9. The document processing device as set forth in claim 8, wherein:
said icon has an appearance related to contents of a concealed part.

10. The document processing device as set forth in claim 8, wherein:
said inputted information is inputted together with the icon for replacing the part to be concealed.

11. The document processing device as set forth in claim 1, further comprising:
a concealment cancellation section for allowing a user to cancel said concealment processing and to specify a part to be outputted in a disclosed state regardless of the device information.

12. The document processing device as set forth in claim 1, wherein:
said output sections (7, 10) possess a secret tray (13) in which confidentiality of outputted information is preserved, and
information is outputted to said secret tray (13) in a disclosed state in which said concealment processing has automatically been cancelled.

13. The document processing device as set forth in claim 1, wherein:
said output sections (7, 10) output information which is made up of control character strings being inserted in said inputted information, said control character strings for informing a user as to which part is concealable.

14. The document processing device as set forth in claim 13, wherein:
said control character strings indicate that a part to be concealed is to be replaced with an icon indicative of contents of the part to be concealed.

15. The document processing device as set forth in claim 13, wherein:
said control character strings indicate a confidentiality level of a part to be concealed.

16. A document processing device which outputs inputted document information, characterized by comprising:
device information memory means (3) for storing device information which includes at least either one of a type of a document processing device and surrounding environment of the document processing device;
concealed processing means (2) for performing concealment processing which conceals a specific part of the inputted document information; and
control means (1) for controlling operation of the concealed processing means (2) based on the device information stored in the device information memory means (3) so as to cause the concealed processing means to output said inputted document information.

17. The document processing device as set forth in claim 16, wherein:
said device information memory means (3) stores the device information in a categorized form, and
said concealed processing means (2) sets a category for a specific part of the document information according to contents of the specific part, compares a category of the device information to the category of the specific part, and judges whether to perform the concealment processing based on results of comparison.

18. The document processing device as set forth in claim 16, wherein:
said device information memory means (3) stores the device information in numerical values, and
said concealed processing means (2) sets a required level of concealment with respect to the specific part of the inputted document information, compares the level to a numerical value of the device information, and judges whether to perform the concealment processing based on results of comparison.

19. The document processing device as set forth in claim 16, comprising:
data memory means (4) which registers conditions for judging a part to be concealed in the document information,
wherein said concealed processing means (2) possesses extracting means (2a) for extracting a part to be concealed from the document information based on a condition registered in said data memory means (4).

20. The document processing device as set forth in claim 19, wherein:
conditions for judging the part to be concealed registered in said data memory means (4) are predetermined character strings, and
said concealed processing means (2) possesses judging means (2b) for judging whether to perform the concealment processing as a result of comparison between said character string and contents of the document information.

21. The document processing device as set forth in claim 19, comprising:
condition cancelling means for cancelling a desired condition among the conditions for judging the part to be concealed registered in said data memory means (4).

22. The document processing device as set forth in claim 20, wherein:
an address book is registered in said data memory means (4), and
said concealed processing means (2) performs the concealment processing with respect to information on particular persons based on data of said address book.

23. The document processing device as set forth in claim 16, comprising:
specifying means for specifying a part to be concealed in the document information.

24. The document processing device as set forth in claim 16, comprising:
concealment cancelling means for setting cancellation of concealment with respect to document information subjected to concealment processing,
wherein said control means (1) carries out control so that document information, in which concealment has been cancelled and which became ineffective, is outputted under normal condition without concealment processing regardless of the device information.

25. The document processing means as set forth in claim 16, wherein:
when output means (7, 10) for outputting document information include output information secrecy preserving means (13) which outputs the document information while maintaining secrecy of contents thereof, said concealed processing means (2) outputs the document information in which concealment has been cancelled.

26. The document processing device as set forth in claim 16, wherein:
said concealed processing means (2) performs icon processing for replacing information of a part subjected to the concealment processing with an icon.

27. The document processing device as set forth in claim 26, wherein:
said icon has an appearance related to the information of the part subjected to the concealment processing.

28. The document processing device as set forth in claim 26, wherein:
said control means (1) collectively transfers as document information the icon related to the information of the part to be concealed, together with original document information.

29. A document processing device which outputs inputted document information, characterized by comprising:
device information memory means (3) for storing device information which includes at least either one of a type of a document processing device and reading environment of the document processing device in which outputted information is read;
concealed processing means (2) for performing concealment processing which conceals a specific part of the inputted document information; and
control means (1) for controlling operation of the concealed processing means (2) based on the device information stored in the device information memory means (3) so as to cause the concealed processing means to output said inputted document information.
